(19) **Europäisches Patentamt / European Patent Office / Office européen des brevets**

(11) **EP 3 610 553 B1**

(12) **EUROPEAN PATENT SPECIFICATION**

(45) Date of publication and mention
of the grant of the patent:
**18.12.2024 Bulletin 2024/51**

(21) Application number: **18725909.8**

(22) Date of filing: **10.04.2018**

(51) International Patent Classification (IPC):
**H02J 7/14** *(2006.01)*     **H02J 7/00** *(2006.01)*
**B60L 50/53** *(2019.01)*

(52) Cooperative Patent Classification (CPC):
**H02J 7/1438; B60L 50/53; H02J 7/0068;**
H02J 2310/48; Y02T 10/70

(86) International application number:
**PCT/IB2018/052523**

(87) International publication number:
**WO 2018/189688 (18.10.2018 Gazette 2018/42)**

(54) **DIRECT CURRENT TO ALTERNATING CURRENT POWER SUPPLY BIDIRECTIONAL SYSTEM FOR VEHICLES OR CONTAINERS WITH ELECTRICAL EQUIPMENT HAVING AN ELECTRICAL GRID CONNECTION**

BIDIREKTIONALES SYSTEM ZUR GLEICHSTROM-ZU-WECHSELSTROM-STROMVERSORGUNG FÜR FAHRZEUGE ODER BEHÄLTER MIT ELEKTRISCHER AUSRÜSTUNG MIT EINEM STROMANSCHLUSS

SYSTÈME BIDIRECTIONNEL D'ALIMENTATION EN COURANT CONTINU/COURANT ALTERNATIF POUR VÉHICULES OU CONTENEURS AVEC ÉQUIPEMENT ÉLECTRIQUE DOTÉS D'UNE CONNEXION DE RÉSEAU ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2017 PT 2017110020**
**21.11.2017 PT 2017110420**

(43) Date of publication of application:
**19.02.2020 Bulletin 2020/08**

(73) Proprietor: **ADDVOLT, S.A.**
**4200-135 Porto (PT)**

(72) Inventors:
• **FORTUNA ARAÚJO, José Pedro**
**4250-252 Porto (PT)**

• **SOUSA SOARES, José Ricardo**
**4400-505 Canidelo/Vila Nova De Gaia (PT)**
• **AZEVEDO COSTA, Bruno Filipe**
**4200-008 Porto (PT)**
• **MARINHO PIRES, Rodrigo Manuel**
**4400 - 505 Canidelo/Vila Nova De Gaia (PT)**
• **DE NETO SOUSA, Justino Miguel**
**4795-053 Vila Das Aves (PT)**

(74) Representative: **Patentree**
**Edificio Net**
**Rua de Salazares, 842**
**4149-002 Porto (PT)**

(56) References cited:
EP-A2- 2 875 984        US-A1- 2008 013 351
US-A1- 2016 016 479     US-A1- 2016 248 263
US-A1- 2016 268 916

## Description

### Technical field

The present description is related to an electrical alternated power supply system for vehicles, containers or transport modules with electrical apparatus with mains supply, as is the case of reefer units.

### Background

To supply an AC load (i.e. electrical equipment) from a DC source, a controller can be applied. They are used, for example, to control induction motors.

A stand-alone motor controller does not behave as a grid tie controller (with or without islanding capabilities).

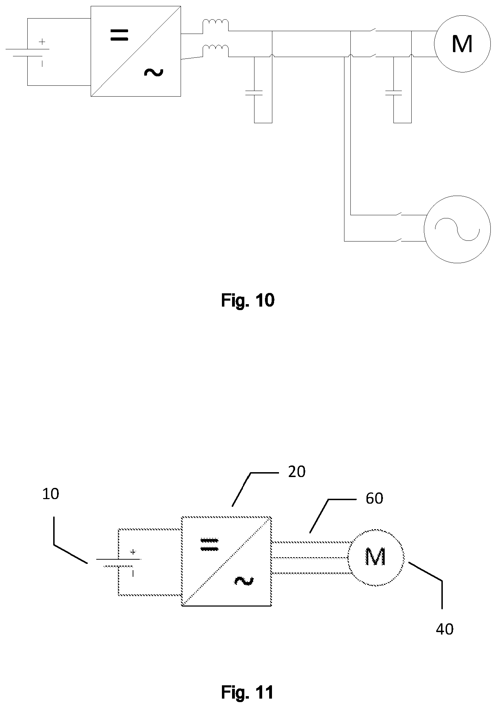

A motor controller (20) usually switches the voltage from the energy source (10) into its arms (60), see fig. 11. The switched voltage on its arms (60) is filtered by the motor or load's internal inductance (40), limiting the current variation for the duration of the pulse.

For motors with nominal frequency at mains frequency (50/60Hz), a motor controller can start the motor with lower voltage, current and frequency than when connecting directly to the mains. This way, a smoother motor start is achieved.

On the other side, a grid tie controller has filters that make its output (approximately) sinusoidal even without load. The three most common modulation schemes are square-wave, modified square-wave and sinusoidal modulation.

If the output is generated through a square-wave or modified square-wave modulation, the output filter must be tuned for the mains frequency (50/60Hz). This fact limits the start of motors with reduced frequency.

The electrical supply of auxiliary loads in heavy-duty vehicles or reefer units, is either by a dedicated generator coupled to a combustion engine or directly by mains. The electrical power can be supplied by the electrical distribution network or by a controller. If the loads have large starting currents, either the inverter power is increased or a soft-starter or Variable Frequency Driver (VFD) is necessary.

These auxiliary systems may be on board of vehicles (including heavy-duty), trailers or even containers for cargo. In these cases, whenever it is not possible to supply them through mains, these systems use a combustion engine coupled to the auxiliary mechanisms.

Document US2016268916A1, for which the preamble of claim 1 relates, discloses a power converter which can be controlled to generate a target output power based on a reactive power reference and an active power reference. Document US2016268916A1 also discloses a control process which may include monitoring a time-varying power signal (e.g., a power grid voltage signal from a power grid), and filtering the time-varying power signal to derive a filtered sine component of the time-varying power signal and a filtered cosine component of the time-varying power signal. Document US2016268916A1 discloses how a sine coefficient and cosine coefficient each based on at least the reactive power reference and the active power reference can be determined, and applied to the filtered sine component and filtered cosine component of the time-varying power signal, respectively; a target current reference of the power converter can then be set to include a sum of the current reference sine component and the current reference cosine component.

These facts are described in order to illustrate the technical problem solved by the embodiments in the present document.

### General description

The invention is defined by a system for a direct-current to alternating-current power-supply bidirectional system for vehicles or transport containers with an electrical equipment as defined in claim 1; the invention being characterised by the features recited in the characterising part of claim 1.

Some vehicles, industrial machinery, trains or even intermodal containers (hereby referred to as load systems) are equipped with electrical loads that can feed from mains. The main caveat is they can only be supplied from mains when parked.

The present disclosure comprises a supply system which can be mounted on the load systems mentioned above, feeding them in electrical mode from a DC energy source, just as if they were connected to mains. The disclosure uses the already present standard plug in the load systems to interface between the energy source, mains and load systems simultaneously. This way any load system can be supplied from the energy source or mains without changing neither the load nor its functionalities.

A standard plug/socket can be defined such as that plug/socket combination that is commonly found or standardized to be found in household, industrial, or in particular, transport facility settings. For example, what is commonly referred as "Schuko"™ or a CEE 7/3 or 7/4, or a CEE 7/6 or 7/7, or a British Type G, Swiss Type J, Danish Type K, or Italian type L., or equivalent triphasic versions, namely industrial versions such as IEC 60309. These are found in the industrial and transport settings where such electrical load equipments normally need to be plugged in.

To achieve such goal, a controller with its filters and derivations is necessary to allow the load system to be supplied by either mains or the DC energy source without any functional difference.

According to the disclosure, besides being able to feed any load electrical equipment of a vehicle or transport container with mains connection (i.e. with an AC electrical supply), the disclosed system itself can transfer energy from energy source to mains bidirectionally through the same plug while the load is still fully operative. This way, when the load system is connected to mains, not only its electrical load is connected but also the disclosed system is automatically connected (which can then decide to charge or inject energy on mains).

It is disclosed a direct current to alternated current power supply system for vehicles, containers or transport modules with electrical apparatus with mains supply, comprising: Direct current energy source; DC-AC controller connected to said direct current energy source; Filter with inductance and capacitance, to connect between the DC-AC controller and said connection for mains supply, in order to limit the current variation in the controller when it is on. It comprises switch or switches such that the flows of energy, between the DC energy source and the electrical equipment, between the DC energy source and the charger electrical grid connection, and between the electrical equipment and the electrical equipment electrical grid connection are bidirectional and independently switchable. The system may be retrofittable to an electrical equipment having a standard power plug, using said standard power plug as the single connection between the system and the electrical equipment.

The system is for connecting to any load system prepared to connect to mains because the system is prepared to emulate mains characteristics; said load system being an electrical equipment of a vehicle or a transport container.

It is disclosed a direct current to alternating current power supply bidirectional system for vehicles or transport containers with electrical equipment having an electrical grid connection for connecting to the electrical grid, comprising:

> a direct current, DC, energy source;
> a bidirectional direct current to alternating current, DC-AC, controller connected to the direct current energy source;
> a filter with a series inductance and a parallel capacitance, connecting between the DC-AC controller and said electrical grid connection of the electrical equipment, for limiting the DC-AC controller current variation when the system is switched on; and,
> according to the invention, the disclosed system also comprises an electrical grid connector for connection to a mains electrical grid, and said bidirectional and independently switchable switch or switches, as defined in claim 1.

In an embodiment, the filter with a series inductance and a parallel capacitance, connecting between the DC-AC controller and said electrical grid connection of the electrical equipment, comprises an additional series inductance forming an L-C-L filter.

The invention comprises switch or switches such that the flows of energy, between the DC energy source and the electrical equipment, and between the electrical equipment and the electrical grid connection are bidirectional and independently switchable.

The invention comprises a charger, mains, electrical grid connection (i.e. an electrical grid connector for connection to a mains electrical grid) for charging the DC energy source, comprising switch or switches such that the flows of energy, between the DC energy source and the electrical equipment, between the DC energy source and the charger, mains, electrical grid connection, and between the electrical equipment and the electrical equipment electrical grid connection are bidirectional and independently switchable.

In an embodiment, the system is retrofittable to an electrical equipment having a standard power plug as the electrical equipment electrical grid connection, using said standard power plug as the single connection between the system and the electrical equipment.

The invention comprises connection switches for mains electrical grid connection for bidirectional energy flow connection from mains electrical grid to the DC source.

An embodiment comprises additional connection switches for bidirectional energy flow connection between the mains electrical grid and the electrical equipment.

An embodiment comprises safety switches between said filter and a common connection to said connection switches.

In an embodiment, the capacitance comprises one or more capacitors, and/or one or more varistors. In an embodiment, the inductance comprises one or more inductors, in particular one or more inductor coils.

In an embodiment, the capacitance is connected either in delta or wye or delta-wye.

In an embodiment, system and filter, and switches if existing, are three-phase, for connection to a three-phase electrical equipment standard plug. In an embodiment, system and filter, and switches if existing, are single-phase, for connection to a single-phase electrical equipment standard plug.

An embodiment comprises a socket for connecting with the electrical equipment plug, in particular a standard power socket.

It is also disclosed a system for vehicles or transport containers with electrical equipment having an optional electrical power generator, comprising a bypass electrical connection for connecting with said generator such that the generator is able to independently, or jointly with powering the electrical equipment, charge the DC power source. In an embodiment, said bypass connection is connected to the electrical power generator to receive energy to charge the DC power source.

An embodiment comprises switch or switches such that the flow of energy, between the DC energy source and the optional electrical power generator, is bidirectional and independently switchable.

The invention comprises an electronic data processor according to claim 1 which is configured for switching between operating modes which comprise:

supplying the electrical equipment from the DC energy source through the DC-AC controller and the filter;
charging the DC energy source from the mains electrical grid;
injecting energy from the DC energy source into the mains electrical grid;
supplying the electrical equipment directly from the mains electrical grid;
simultaneously, supplying the electrical equipment directly from the mains electrical grid while the DC energy source charges with power derating, in particular with power derating by the DC-AC controller.

In an embodiment, said operating modes further comprise:

the generator charging the DC energy source, exclusively;
simultaneously, the generator charging the DC energy source and supplying the electrical equipment, in particular the DC energy source being charged with power derating by the DC-AC controller.

Derating is the operation of a device at less than its rated maximum capability. Typical examples include operation below the maximum power rating, current rating, or voltage rating. In the present disclosure, derating is used to reducing the amount of power for battery charging to take into account the power limit of the power supply. For example, for the two cases above, respectively:

power derating means reducing the amount of power for battery charging, in order to not overload the power grid outlet, according to the invention.
power derating means reducing the amount of power for battery charging, in order to not overload the generator, according to an embodiment.

The electrical equipment is normally on-board electrical equipment like a refrigerator. In an embodiment, the vehicle or transport container electrical equipment is refrigeration equipment; in particular the electrical equipment is an electrical compressor motor for refrigeration equipment.

In an embodiment, the electrical power generator is a combustion motor (e.g. diesel or gasoline). In an embodiment, the DC energy source is a battery, super-capacitor, or combination of batteries, fuel cells and/or super-capacitor.

**Brief description of the figures**

For better illustrating the disclosure, the attached figures represent preferential embodiments that are not to be considered limitative.

**Figure 1:** Schematic representation of an embodiment of the electrical alternated power supply system for vehicles and containers with mains connection.
**Figure 2:** Schematic representation of a motor with capacitor bank.
**Figure 3:** Schematic representation of an LC filter for the system.
**Figure 4:** Schematic representation of an embodiment of the present system with supply switches.
**Figure 5:** Schematic representation of an alternative to the LC filter using varistors.
**Figure 6:** Schematic representation of the system with switches to the mains connection.
**Figure 7:** Schematic representation of an embodiment of the present system with switches to isolate controller from mains and load.
**Figure 8:** Schematic representation of an embodiment of the present system with power line filters to control mains connection impedance without interfering with motor connection impedance.
**Figure 9:** Schematic representation of an embodiment of the present system.
**Figure 10:** Schematic representation of a single-phase embodiment of the present system.

**Figure 11:** Schematic representation of the motor and respective controller.

**Figure 12:** Schematic representation of the connection to mains with plug/socket.

**Figure 13:** Schematic representation of an embodiment of the present system with plug/socket.

**Figure 14:** Schematic representation of an embodiment of the present system with plug/socket and with electrical generator.

**Figure 15:** Schematic representation of an embodiment of the present system with plug/socket and with electrical generator, wherein the load is, for example, a refrigerated container with its own electrical generator, wherein the disclosed system, namely the DC-AC controller and electrical accumulator, are placed on a truck trailer adapted to carry containers.

**Figure 16:** Schematic representation of a single-phase embodiment of the present system with electrical generator showing a direct connection to the generator.

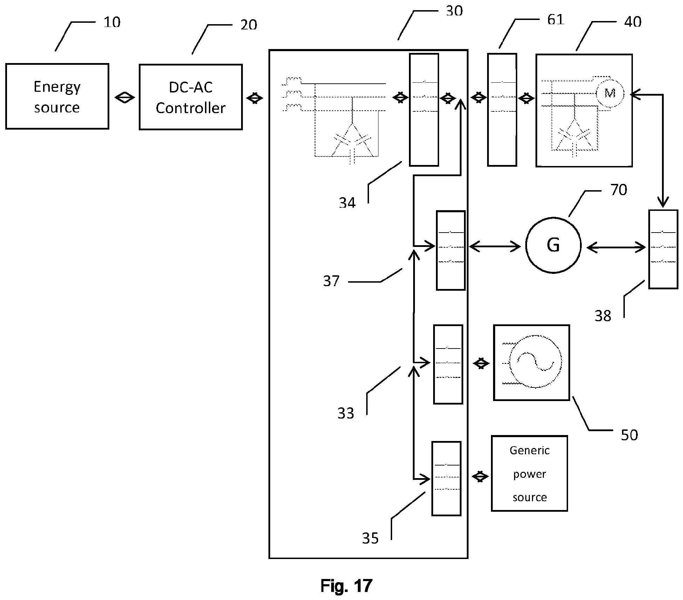

**Figure 17:** Schematic representation of a 3-phase embodiment of the present system with direct connection to electric generator and other previously disclosed aspects.

## Detailed description

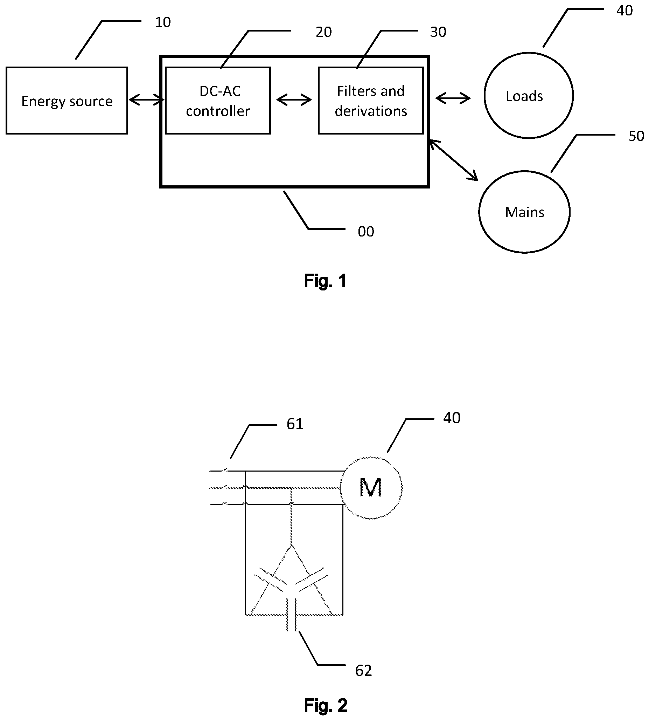

It is described a system (00) composed of a DC-AC controller (20) according to the present embodiments, which is capable of grid tied or off grid operation, as well as capable of controlling electrical loads such as motors (40), syncing with the grid (50) for charging an energy source (10) or injecting on the grid (50) with energy from the energy source (10) simultaneously, see fig. 1 for a schematic representation.

It is also comprised of a set of filters and derivations (30) which allow the integration and interface of the energy source (10), mains (50) and AC loads (40) in an independent and bidirectional fashion.

Although a motor controller apparently satisfies the needs to supply auxiliary loads, if a motor is coupled with a capacitor bank (62) before the motor inductance (40) (for various reasons), then the current variation during a pulse is no longer limited by the inductance of the motor and the maximum current is limited by the resistance of the electrical path. As a direct consequence, the current that flows through the controllers will be several times larger than the nominal load current, which may incur in system damage.

There is also the possibility of the operation start being externally controlled, for example with switches (61), see fig. 2 for a schematic representation. These switches will only conduct in case energy is detected. In this situation, the motor controller won't be able to generate a voltage similar to mains and consequently the switches will never conduct. A Carrier or a Thermo King reefer unit are examples of said systems. The voltage is read to the left of the switches (61) and the reefer temperature is measured. If there is voltage at the switches (61) and the temperature is below its setpoint, the switches (61) start conducting.

This description enables the retrofitting of loads supplied by mains in a transparent fashion for the user as explained next.

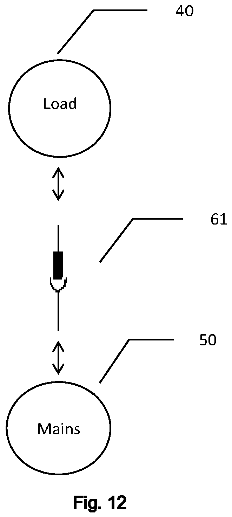

For a load (40) supplied by mains (50) through a plug/socket such as socket (61) and plug (62), see fig.12: From the functional point of view, the load can be seen as the set (40) and (61). The mains is then (50) and (62).

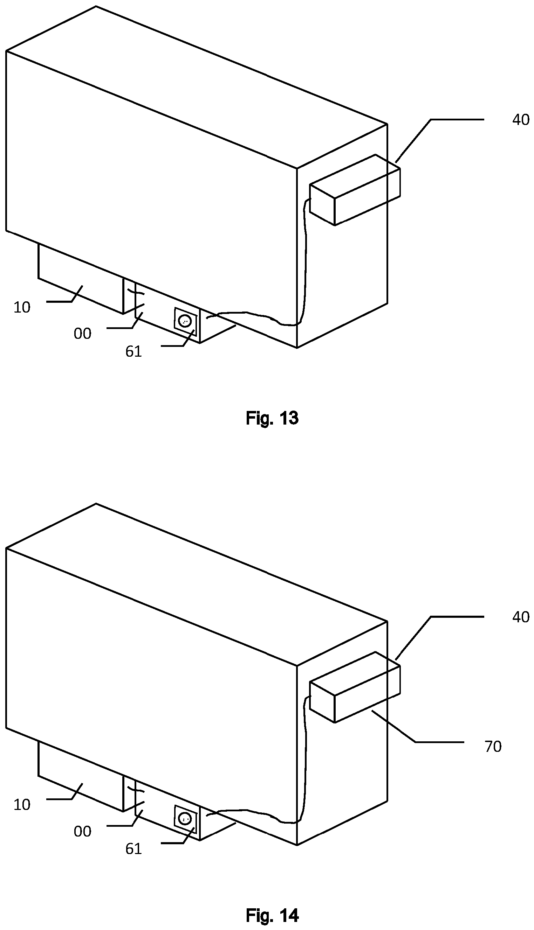

It is possible to integrate the disclosure in a transparent way for the user (which will operate only the plug/socket (61 and 62) ), see fig. 13.

The loads are connected internally through the filters and derivations (30) detailed next. As will be demonstrated, the filter variations can be placed in (30). As long as the plug (61) is placed in the point where the filters and derivations (30) connect to mains (50), then the load can be directly connected to the filters and derivations as in the shown schemes (without the plugs), keeping the transparency to the user.

The user will plug in the socket (62) as he has always been doing and been trained to do, and the proposed disclosure is responsible for the energy management between energy source, loads and mains.

From the functional point of view, the "load", as seen from the user, is now the energy source (10), DC-AC controller (20), filters and derivations (30), loads (40) and plug (61).

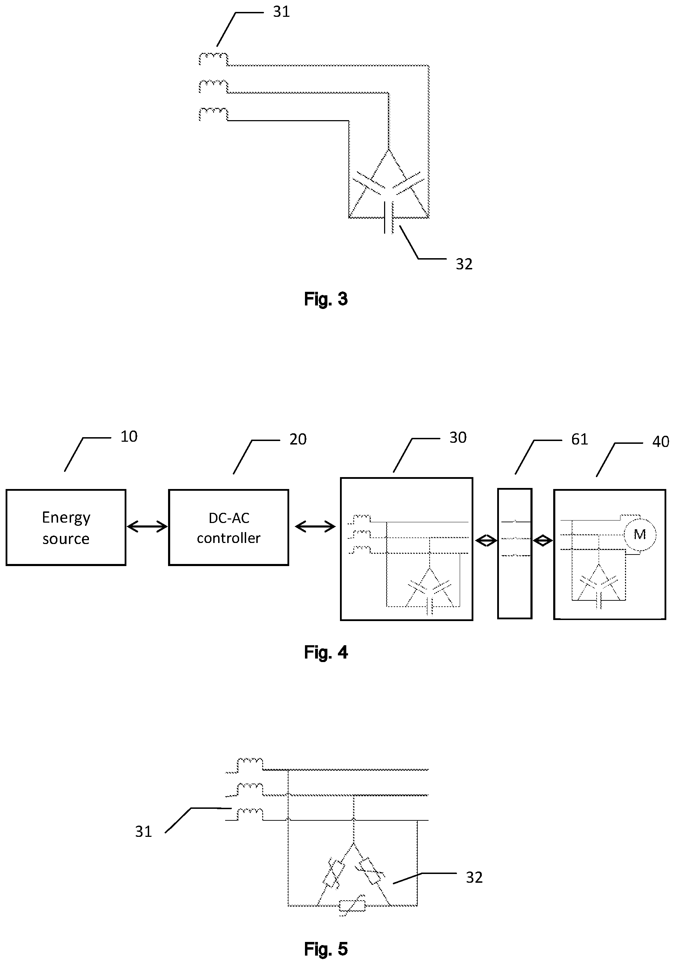

The present description presents a configuration of an inductive filter at switching frequency that makes the DC-AC controller (20) see an inductance before the capacitive elements. In its simpler configuration, it is made only of 3 inductors (31) and 3 capacitors (32), see fig. 3 for a schematic representation. Several modifications can alter its behavior, but their function is similar to the proposed filter in this description (30).

This filter solves the problems described and provides the following advantages:

- the inductance (31) filters the switched voltage from the controller (20), limiting the current variation on the controller:
- this way the DC-AC controller (20) can operate in its whole range of power, current, voltage and frequency;
- as a consequence of the filter's inductance, this configuration enables the connection of the present embodiments to loads of all natures (resistive, inductive or capacitive) without damaging the system;
- the switches (61) will see the filtered voltage (approximately sinusoidal). This will allow the loads to always detect the presence of the AC voltage
- the switches (61) can stop conducting without stress caused by an inductive load (40), because on both sides of the switches are capacitive loads;

Furthermore, an input capacitor at the electrical equipment to be powered, in parallel with the load, would short-circuit the DC-AC switches (IGBTS). The LC filter is used to limit the peak current that could be generated due to the capacitors connected across the electrical equipment, avoiding the short-circuit. A further additional series inductance results on a LCL filter, which increases the noise attenuation capability. This ensures that the voltage generated by the DC-AC controller to feed the electrical equipment is sufficiently filtered in order to guarantee more compatibility with the load (ex: refrigerated units), namely avoiding problems of voltage detection by the electrical equipment.

The capacitors (32) can be connected in delta (as in the picture) or wye.

Exemplifying, if the converter operates at a 10 kHz frequency, the L and C value must be calculated such as to place the resonant frequency between switching frequency and maximum load frequency operation.

$$\omega_{load} < \frac{1}{\sqrt{LC}} < \omega_{switching}$$

L and C can be designed in many ways, namely:

- to limit the current rippled caused by the switching voltage applied by the controller
- to limit the voltage ripple on the capacitors caused by the ripple current in the inductors
- to limit the current peaks caused by load disturbances.

Taking L=2mH and C=10uF (with the capacitors (32) with a wye connection:

$$\omega_{ressonance} = \frac{1}{\sqrt{LC}} = \frac{1}{\sqrt{0.002 * 0.00001}} = 7071 \, rad/s$$

Consequently, being possible to operate loads with frequency lower than this value, switching at frequencies higher than this value.

The current ripple can be calculated, with some approximations, through:

$$\Delta i = \frac{V}{L} * \Delta t$$

Where V is the voltage drop between controller and capacitor. The waveform (and consequently applied voltage) is dependent on both controller modulation and voltage on the capacitor at the given moment.

The voltage ripple on the capacitor can be calculated, with some approximations, through:

$$\Delta v = \frac{I}{C} * \Delta t$$

Where I is equal to the difference between current through the inductor and current into the load.

The load variations will disturb the voltage on the capacitors (32). The maximum rate at which this variation occurs (in time) can be calculated once more though the inductor formula:

$$\frac{\Delta i}{\Delta t} = \frac{V}{L}$$

Fig. 4 describes an example of the application of the present description when the load (61+40) is made of switches (61) and a motor (40), which may or may not have capacitive elements at its terminals. Any combination of load can be supplied through the filters (30).

The controller (20), when connected to the filters (30), shares all the advantages described above and more:

- controlling the load with controlled voltage, current and frequency;
- drastic reduction of the converter's power caused by the increased ease in controlling the power transients of the load;
- increased ease when controlling distinct loads because the controller will see the load impedance (40) masked by the filter's impedance (30). This way, variations in the load nature will have less of an impact on the system's dynamic than if the filter (30) didn't exist;
- when the load or motor are not in operation, i.e., with switch (61) out of conduction, then this controller has the ability to reduce the voltage to a lower value that is still accepted by the load, in order to reduce the standby power consumption.

Instead of the LC filter, other solutions can be implemented, replacing the capacitors by other elements able to absorb electrical energy, as is the case of varistors, see fig. 5.

The filter (30) described above is compatible and useful to variations the allow the mains connection.

Below are described some of the possibilities, having in common the filter (30), to which are added switches (to allow the independent connection of loads and mains). It is even possible the add power line filters to the mains connection in the topology, improving it without compromising its operation.

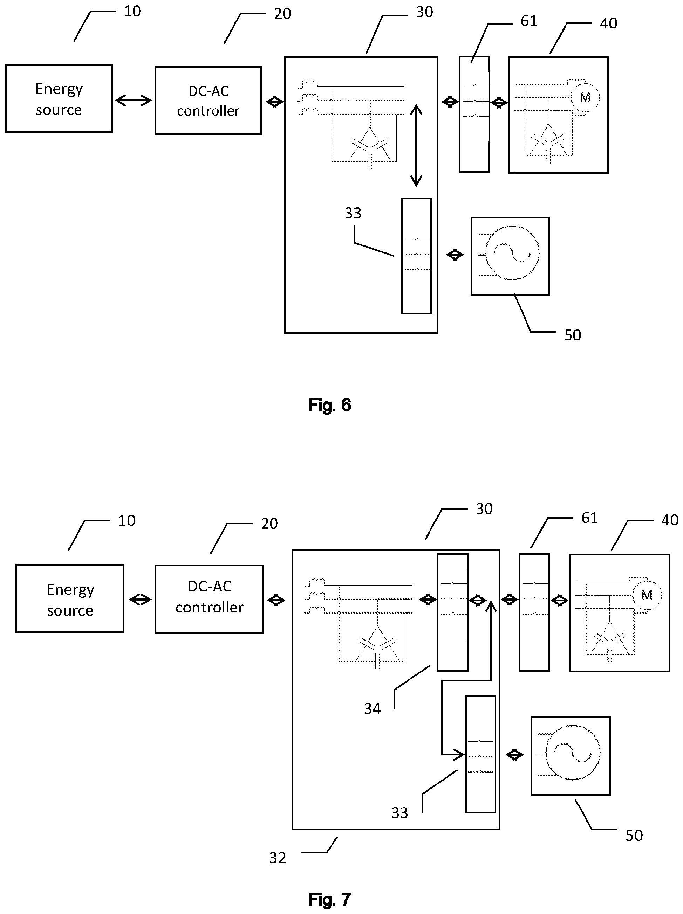

The addition of switches (33) allows the connection to mains in a controlled fashion, see fig. 6.

This variation has the following advantages:

- all presented in the previous topologies;
- possibility to start motor before connecting to mains, syncing with it and connecting the motor to mains already at nominal speed (useful for electrical installations without enough power to sustain the motor start);
- as consequence of the points above, reduction of wear in the motor due to the softer starts;
- possibility of bidirectional flow of energy on the battery or DC source, motor operation and mains with only one inverter and without additional rectifiers, all these operations are independent from each other, i.e., they can all happen simultaneously as well as any combination between them.

The addition of switches (34) adds an additional safety layer to the present description, isolating the controller from mains (50) and load (40), see fig. 7.

The topology shown has the additional advantage and functionality:

- the switches (34) enable the decoupling of the inverter from mains and motor, allowing the inverter to be isolated in case of failure, as well as operating the capacitors (32) isolated at a different voltage, current and/or frequency.

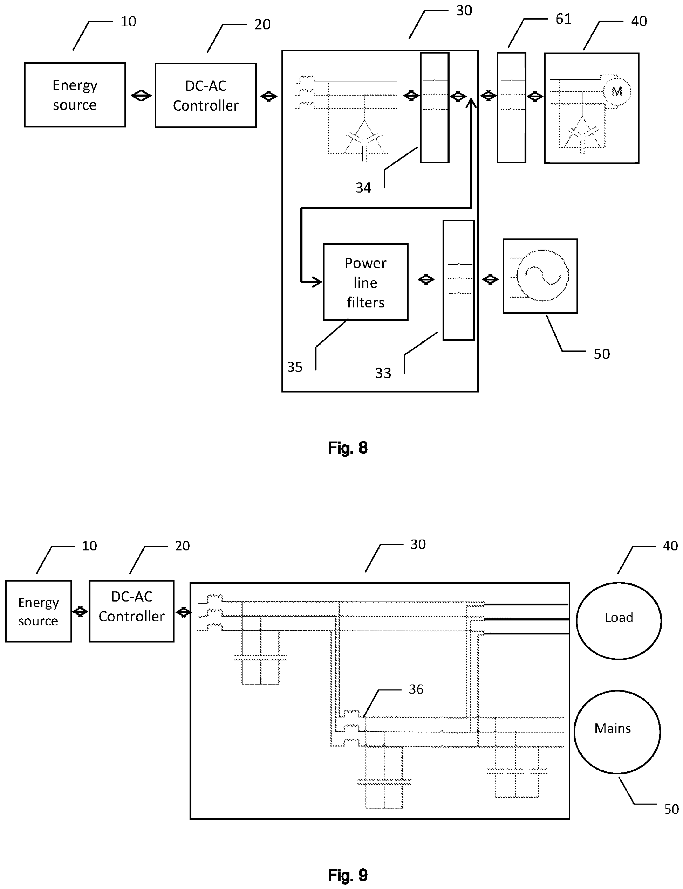

The addition of power line filters (35) placed on a branch that doesn't affect controller impedance to the load enables the control of the impedance of mains connection without compromising the control of the load, see fig. 8.

This variation as the additional advantage:

- attenuation of emission and susceptibility to harmonics on mains.

This alternative shows an implementation of the concept present in the description, exemplifying with the electrical connections. The connection to motor and mains is made with only 2 groups of switches (a single pole single throw (SPST) group and a single pole double throw (SPDT) group), see fig.9.

This topology has the additional advantages:

- the SPDT switches, having a normally closed contact, allow the motor to connect to mains transparently;
- it is possible to include an arbitrary power line filter in place 36, without interfering directly with the power connection from inverter to motor. The filter in place 36 will work as an extra load (normally insignificant) when operating only the motor;
- when mains (50) connects to load (40) directly, the connection is not affected by the power line filter (36), thus not altering the impedance between mains and load. This functionality is useful to loads that are dimensioned to work directly from mains.

The same concept can be applied to single-phase systems, with or without mains connection, see fig.10. One or two inductors can be used.

As in the picture above, all presented variations are also valid for single-phase systems, adapted by removing one of the arms and filter elements (30) that were connected to that arm.

Fig. 14 shows an alternative embodiment applied to a refrigerated trailer that includes an electrical generator (70). This generator is normally powered by an included diesel engine, but other engines or mechanical power inputs may be used to power the generator.

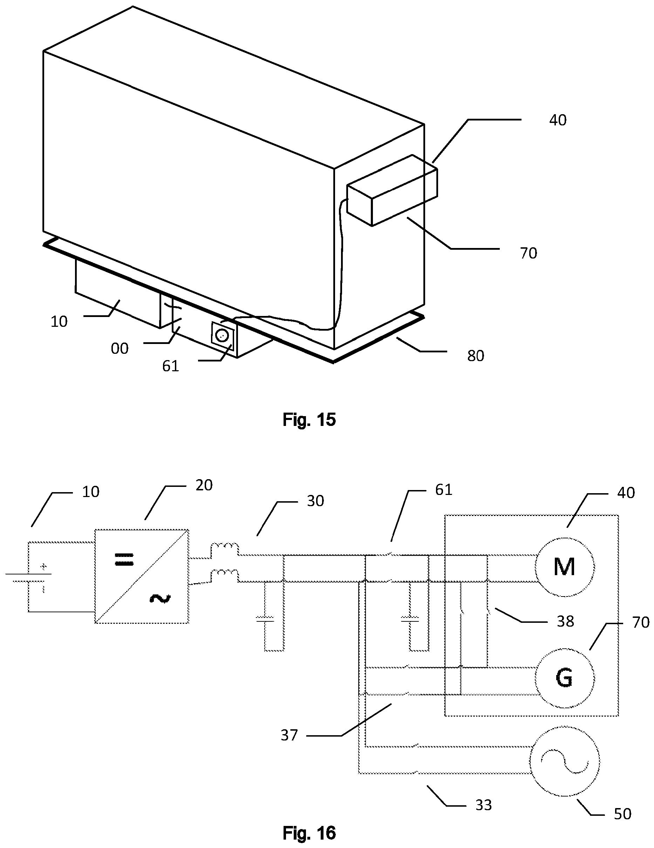

Fig. 15 shows an alternative embodiment also applied to a refrigerated vehicle that also includes an electrical generator (70), but in this case the refrigerated part is a container which is transported by a trailer (80) that is adapted for transporting containers. The system is particularly advantageous as it allows the uncoupling of the two parts, keeping the disclosed elements in the trailer which can be connected when needed with the refrigeration equipment of the container, in particular using a standard power socket/plug combination.

When the load includes an electrical generator, these systems will normally include an internal switch that connects or disconnects the generator from the load. This can be used advantageously by having a direct connection between the generator and the power input (mains connection) of the disclosed embodiments. This connection is preferably connected by means of a switch (37).

This is advantageous because the generator can power and charge the energy source (10) independently, if switches 38 are disconnected. Furthermore, if switches 38 are connected, the remaining power from the generator powering the load can be used to power (albeit with less power) and charge the energy source (10).

With these alternatives, the mains connection can be generalized to any power source with adequate electrical parameters (i. e., respecting the system's components electrical limits).

The generic power source can be either controlled by the system through switches 35 or switches 37, or externally through switches 38. It may even be the case where the generic power source is also a load.

An example for a data processor suitable for controlling the disclosed system is a STM32 series (ARM cortex M4). An example for the switches comprises IGBTs and relays - using mechanical switches has the advantage that disconnection can be guaranteed in a power-off state. An example for a DC-AC controller comprises a controller which converts the DC current into AC current, operationally it may comprise a stage with a buck-boost to convert the voltage level and a stage with an inverter to convert the DC current into AC current.

The present disclosure should not be seen as limited to the embodiments described in this document, and a person with average knowledge on the subject can derive several modifications and replace technical characteristics for the sake of each situation and application, as defined in the attached claims. The following dependent claims define additional embodiments of the present disclosure.

## Claims

1.  Direct current to alternating current power supply bidirectional system for vehicles or transport containers with an electrical equipment (40), said electrical equipment being adapted to be supplied by an AC electrical supply, the system comprising:

    an electrical grid connector for connection to a mains electrical grid;
    a direct current, DC, energy source (10);
    a bidirectional direct current to alternating current, DC-AC, controller (20) connected to the direct current energy source; and
    a filter (30) with a series inductance (31) and a parallel capacitance (32), arranged to be connected between the DC-AC controller and said AC electrical supply, for limiting the DC-AC
    controller current variation when the system is supplying the electrical equipment;
    **characterized by** the system further comprising switches (34, 33, 61) which are bidirectional and independently switchable; and
    the system further comprising an electronic data processor configured for switching said switches between operating modes which comprise:

    supplying the electrical equipment with the AC electrical supply from the DC energy source through the DC-AC controller and the filter;
    charging the DC energy source from the mains electrical grid via the electrical grid connector;
    injecting energy from the DC energy source into the mains electrical grid via the electrical grid connector;
    supplying the electrical equipment directly from the mains electrical grid via the electrical grid connector; and
    simultaneously, supplying the electrical equipment directly from the mains electrical grid via the electrical grid connector while the DC energy source charges with power derating by the DC-AC controller.

2.  System according to the previous claim being retrofittable to an electrical equipment having a standard power plug as the AC electrical supply of the electrical equipment, said standard power plug being the sole connection between the system and the electrical equipment.

3.  System according to any of the previous claims for vehicles or transport containers with electrical equipment having an electrical power generator, comprising a bypass electrical connector for connecting with said generator such that the generator is able to independently, or jointly with powering the electrical equipment, charge the DC power source.

4. System according to the previous claim wherein said bypass connector is connectable to the electrical power generator to receive energy to charge the DC power source.

5. System according to claim 3 or 4 comprising an additional switch or switches such that the flow of energy, between the DC energy source and the electrical power generator, is bidirectional and independently switchable.

6. System according to any of the claims 3-5, comprising a standard power plug at said bypass electrical connector for connecting with said electrical power generator.

7. System according to any of the previous claims, wherein the filter with a series inductance and a parallel capacitance arranged to be connected between the DC-AC controller and the AC electrical supply of the electrical equipment, comprises an additional series inductance forming an L-C-L filter.

8. System according to any of the previous claims, wherein the capacitance comprises one or more capacitors, and/or one or more varistors.

9. System according to any of the previous claims, wherein the inductance comprises one or more inductors, in particular one or more inductor coils.

10. System according to any of the previous claims, wherein system, filter, and switches are three-phase, for connection to a three-phase electrical equipment standard plug.

11. System according to the previous claim, wherein the capacitance is connected either in delta, wye, or delta-wye.

12. System according to any of the claims 1-9, wherein system, filter, and switches are single-phase, for connection to a single-phase electrical equipment standard plug.

13. System according to any of the previous claims, comprising a socket for connecting with the AC electrical supply of the electrical equipment which is a plug, in particular the socket being a standard power socket.

14. System according to any of the previous claims wherein the vehicle or transport container electrical equipment is a refrigeration equipment.

15. System according to the previous claim, wherein the electrical equipment is an electrical compressor motor of a refrigerator.

**Patentansprüche**

1. Bidirektionales System zur Gleichstrom-zu-Wechselstrom-Stromversorgung für Fahrzeuge oder Transportbehälter mit einer elektrischen Ausrüstung (40), wobei die genannte elektrische Ausrüstung so ausgelegt ist, dass sie von einer Wechselstrom-Stromversorgung (AC) versorgt werden kann, wobei das System umfasst:

einen elektrischen Netzanschluss für den Anschluss an ein Stromnetz;
eine Gleichstrom-Stromquelle (DC) (10);
einen bidirektionalen Gleichstrom-zu-Wechselstrom-Regler (20) (DC-AC), der mit der Gleichstrom-Stromquelle (DC) verbunden ist; und
einen Filter (30) mit einer Serieninduktivität (31) und einer Parallelkapazität (32), die so angeordnet sind, dass sie zwischen dem Gleichstrom-zu-Wechselstrom-Regler (DC-AC) und
der genannten Wechselstrom-Stromversorgung (AC) angeschlossen werden, um die Stromschwankung des Gleichstrom-zu-Wechselstrom-Reglers (DC-AC) zu begrenzen, wenn
das System die elektrische Ausrüstung versorgt;
**dadurch gekennzeichnet, dass** das System ferner Schalter (34, 33, 61) umfasst, die bidirektional und unabhängig schaltbar sind; und
das System ferner einen elektronischen Datenprozessor umfasst, der so konfiguriert ist, dass er die genannten Schalter zwischen Betriebsarten umschalten kann, die umfassen:

Versorgung der elektrischen Ausrüstung mit Wechselstrom (AC) aus der Gleichstromquelle (DC) über den Gleichstrom-zu-Wechselstrom-Regler (DC-AC) und den Filter;
Laden der Gleichstrom-Stromquelle (DC) über das Stromnetz über den elektrischen Netzanschluss; Einspeisen von Energie aus der Gleichstrom-Stromquelle (DC) in das Stromnetz über den elektrischen Netzanschluss;
Versorgung der elektrischen Ausrüstung direkt aus dem Stromnetz über den elektrischen Netzanschluss; und
Gleichzeitige Versorgung der elektrischen Ausrüstung direkt über das Stromnetz über den elektrischen Netzanschluss, während die Gleichstromquelle (DC) mit einem Leistungsderating über den Gleichstrom-zu-Wechselstrom-Regler (DC-AC) geladen wird.

2. System nach dem vorangehenden Anspruch, das in eine elektrische Ausrüstung mit einem Standardnetzstecker als Wechselstromversorgung (AC) der elektrischen Ausrüstung nachrüstbar ist, wobei der genannte Standardnetzstecker die einzige Verbindung zwischen dem System und der elektrischen Ausrüstung ist.

3. System nach einem der vorangehenden Ansprüche für Fahrzeuge oder Transportbehälter mit elektrischer Ausrüstung, das einen Stromerzeuger aufweist, umfassend einen elektrischen Bypass-Steckverbinder zur Verbindung mit dem genannten Erzeuger, so dass der Erzeuger in der Lage ist, die Gleichstromquelle (DC) unabhängig oder gemeinsam mit der die elektrischen Ausrüstung zu laden.

4. System nach dem vorangehenden Anspruch, wobei der Bypass-Steckverbinder mit dem Stromerzeuger verbunden werden kann, um Strom zum Laden der Gleichstromquelle (DC) aufzunehmen.

5. System nach Anspruch 3 oder 4, umfassend einen oder mehrere zusätzliche Schalter, so dass der Energiestrom zwischen der Gleichstrom-Stromquelle (DC) und dem Stromerzeuger bidirektional und unabhängig schaltbar ist.

6. System nach einem der Ansprüche 3-5, umfassend einen Standardnetzstecker an dem genannten elektrischen Bypass-Steckverbinder zur Verbindung mit dem genannten Stromerzeuger.

7. System nach einem der vorangehenden Ansprüche, wobei der Filter mit einer Serieninduktivität und einer Parallelkapazität, der zwischen den Gleichstrom-zu-Wechselstrom-Regler und der Wechselstromversorgung (AC) der elektrischen Ausrüstung geschaltet wird, eine zusätzliche Serieninduktivität umfasst, die einen LCL-Filter bildet.

8. System nach einem der vorangehenden Ansprüche, wobei die Kapazität einen oder mehrere Kondensatoren und/oder einen oder mehrere Varistoren umfasst.

9. System nach einem der vorangehenden Ansprüche, wobei die Induktivität eine oder mehrere Induktoren umfasst, insbesondere eine oder mehrere Induktionsspulen.

10. System nach einem der vorangehenden Ansprüche, wobei das System, Filter und Schalter dreiphasig sind, um an einen Standardstecker für eine dreiphasige elektrische Ausrüstung angeschlossen zu werden.

11. System nach dem vorangehenden Anspruch, wobei der Anschluss der Kapazität über eine Dreieck-, Stern- oder Dreieck-Stern-Schaltung erfolgt.

12. System nach einem der Ansprüche 1-9, wobei das System, Filter und Schalter einphasig sind, um an einen Standardstecker für eine einphasige elektrische Ausrüstung angeschlossen zu werden.

13. System nach einem der vorangehenden Ansprüche, umfassend eine Steckdose zum Anschluss an die Wechselstromversorgung (AC) der elektrischen Ausrüstung, die ein Stecker ist, wobei die Steckdose insbesondere eine Standardsteckdose ist.

14. System nach einem der vorangehenden Ansprüche, wobei die elektrische Ausrüstung des Fahrzeugs oder des Transportbehälters eine Kühlausrüstung ist.

15. System nach dem vorangehenden Anspruch, wobei die elektrische Ausrüstung ein elektrischer Kompressormotor eines Kühlschranks ist.

**Revendications**

1. Système bidirectionnel d'alimentation en courant continu/courant alternatif pour les véhicules ou conteneurs de transport avec un équipement électrique (40), ledit équipement électrique étant adapté pour être alimenté par une alimentation électrique CA, le système comprenant :

   un connecteur de réseau électrique pour une connexion à un réseau électrique principal ;
   une source d'énergie à courant continu, CC, (10);
   un contrôleur bidirectionnel en courant continu/courant alternatif (20), CC-CA,
   connecté à la source d'énergie en courant continu ; et
   un filtre (30) avec une inductance en série (31) et une capacitance parallèle (32),
   arrangé pour être connecté entre le contrôleur CC-CA et ladite alimentation électrique AC, pour limiter la variation de courant du contrôleur CC-CA lorsque le
   système alimente l'équipement électrique ;
   **caractérisé en ce que** le système comprend également des commutateurs (34, 33, 61) qui sont bidirectionnels et indépendamment commutables ; et
   le système comprend également un traiteur de données électronique configuré pour commuter lesdits commutateurs entre les modes d'opérations qui comprend :

      alimenter l'équipement électrique avec l'alimentation électrique CA à partir de la source d'énergie DC à travers le contrôleur CC-CA et le filtre ;
      charger la source d'énergie CC à partir du principal réseau électrique à travers le connecteur de réseau électrique ;
      injecter de l'énergie issue de la source d'énergie CC vers le principal réseau électrique à travers le connecteur de réseau électrique ;
      alimenter l'équipement électrique directement à partir du principal réseau électrique à travers le connecteur de réseau électrique ; et
      simultanément, alimenter l'équipement électrique directement à partir du principal réseau électrique à travers le connecteur de réseau électrique pendant que la source d'énergie CC charge avec l'énergie réduite par le contrôleur CC-CA.

2. Système selon la revendication précédente pouvant être réajusté à un équipement électrique ayant un point de branchement d'alimentation standard comme l'alimentation électrique CA de l'équipement électrique, ledit point de branchement d'alimentation standard étant la seule connexion entre le système et l'équipement électrique.

3. Système selon l'une quelconque des revendications précédentes pour véhicules ou conteneurs de transport avec équipement électrique ayant un générateur d'énergie électrique, comprenant un connecteur électrique de dérivation pour connecter audit générateur tel que le générateur soit capable, indépendamment ou conjointement avec l'alimentation de l'équipement électrique, de charger la source d'alimentation CC.

4. Système selon la revendication précédente dans lequel ledit connecteur de dérivation peut être connecté au générateur d'énergie électrique pour recevoir de l'énergie pour charger la source d'alimentation CC.

5. Système selon la revendication 3 ou 4 comprenant un commutateur ou des commutateurs supplémentaire(s) tel(s) que le flux d'énergie, entre la source d'énergie CC et le générateur d'énergie électrique, soit bidirectionnel et indépendamment commutable.

6. Système selon l'une quelconque des revendications 3-5, comprenant un point de branchement d'alimentation standard sur ledit connecteur électrique de dérivation pour connecter audit générateur d'énergie électrique.

7. Système selon l'une quelconque des revendications précédentes, dans lequel le filtre avec une inductance en série et une capacitance parallèle arrangé pour être connecté entre le contrôleur CC-CA et l'alimentation électrique CA de l'équipement électrique, comprend une inductance en série supplémentaire formant un filtre L-C-L.

8. Système selon l'une quelconque des revendications précédentes, dans lequel la capacitance comprend un ou plusieurs condensateurs, et/ou une ou plusieurs varistances.

9. Système selon l'une quelconque des revendications précédentes, dans lequel l'inductance comprend un ou plusieurs inducteurs, en particulier une ou plusieurs bobines d'inducteur.

10. Système selon l'une quelconque des revendications précédentes, dans lequel le système, le filtre, et les commutateurs sont triphasés, pour une connexion à un point de branchement standard d'équipement électrique triphasé.

11. Système selon la revendication précédente, dans lequel la capacitance est connectée en triangle, en étoile ou en triangle-étoile.

12. Système selon l'une quelconque des revendications 1-9, dans lequel le système, le filtre, et les commutateurs sont monophasés, pour une connexion à un point de branchement standard d'équipement électrique monophasé.

13. Système selon l'une quelconque des revendications précédentes, comprenant une prise pour le connecter à l'alimentation électrique CA de l'équipement électrique qui est un point de branchement, la prise étant en particulier une prise d'alimentation standard.

14. Système selon l'une quelconque des revendications précédentes dans lequel l'équipement électrique de véhicule ou de conteneur de transport est un équipement de réfrigération.

15. Système selon la revendication précédente, dans lequel l'équipement électrique est un moteur de compresseur électrique d'un réfrigérateur.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

40

Load

61

50

Mains

**Fig. 12**

**Fig. 13**

**Fig. 14**

**Fig. 15**

**Fig. 16**

**Fig. 17**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016268916 A1